# EUROPEAN PATENT SPECIFICATION

(11) **EP 2 921 128 B1**
(45) Date of publication and mention of the grant of the patent: **25.12.2019**
(21) Application number: 13855881.2
(22) Date of filing: 07.11.2013
(51) Int. Cl.: A61C 1/08

(54) **GUIDE JIG**
FÜHRUNGSVORRICHTUNG
OUTIL GUIDE

(30) Priority: 15.11.2012 JP 2012250805; 27.12.2012 JP 2012284861
(43) Date of publication of application: 23.09.2015
(73) Proprietor: Seiyukai Healthcare Corporation, Tokyo 134-0087 (JP)
(72) Inventor: OYABU, Tomotaka, Tokyo 134-0087 (JP)
(74) Representative: Ishiguro, Masaoki
(86) International application number: PCT/JP2013/080064
(87) International publication number: WO 2014/077172

(56) References cited:
- WO-A1-94/00073
- WO-A1-94/00073
- DE-A1-102007 044 781
- DE-A1-102007 046 638
- JP-A- 2008 005 960
- JP-A- 2008 245 681
- JP-A- 2012 147 845
- KR-B1- 100 829 244
- US-A- 5 302 122
- US-A- 5 741 133
- US-A1- 2004 013 999
- US-A1- 2006 194 166

## Description

### Technical Field

The present invention relates to a guide jig for guiding a cutting burr attached to a handpiece when forming an implant cavity (implantation hole) into which an implant (artificial tooth) is implanted.

### Background Art

In implant treatment, a position, direction and depth of an implant cavity in the alveolar bone are important in avoiding damages to a peripheral region, malocclusion after mounting of an artificial tooth crown or the like. Examples of known implant treatment methods include a method of creating a stent for positioning an implant cavity on a patient's tooth form model before carrying out an implanting surgery and a method of creating a stent using a CT scan image of the jawbone before carrying out an implanting surgery (see Patent Literature 1). Furthermore, a method without using any stent before carrying out implanting surgery is also known.

### Citation List

### Patent Literature

[Patent Literature 1] Japanese Patent Application Laid-Open No.2008-307281
[Patent Literature 2] WO 94/00073
[Patent Literature 3] DE 10 2007 044 781

Both WO 94/00073 and DE 10 2007 044 781 discloses a guide jig for guiding a drill bit attached to a handpiece when forming an implant cavity at an implantation position of an implant, the guide jig comprising: an elongated handle section; a pole section that supports an end side of the handle section; and a guide section that guides the drill bit on the end side of the handle section.

### Summary of the Invention

### Technical Problem

The method of creating a stent on a patient's tooth form model may not be sufficiently effective during surgery such as the position of a guide hole formed in the stent being slightly deviated from the implantation position of the implant cavity. Moreover, with the stent attached, it may be difficult to make fine adjustments of the depth of the implant cavity and when the distance to the mandibular nerve or maxillary sinus is short, it may be necessary to mount a stopper on the cutting burr with the stent removed and make fine adjustments of the depth. For this reason, it may take labor and time to adjust the depth, thereby requiring an extended surgical time and increasing the patient's burden.

The method of creating a stent using a CT scan image of the jawbone described in Patent Literature 1 makes it possible to form an appropriate guide hole in the stent using digital data, thereby improve the accuracy of the position, direction and depth of the implant cavity and reduce the surgical time, whereas the method requires equipment such as a CT imaging device, which may increase an installation cost. On the other hand, with the method without using any stent, even when an occlusal relationship is checked beforehand and an optimum cutting position is determined, the implant cavity may not be formed appropriately because cutting is done based on a visual check. Particularly, bleeding or the like may make it difficult to visually inspect whether the tip of the cutting burr contacts an appropriate position or not.

The present invention has been implemented in view of the above problems, and it is an object of the present invention to provide a guide jig capable of appropriately forming an implant cavity without forming any stent and shortening a surgical time at a low cost.

### Solution to Problem

A guide jig according to the present invention is defined in appended independent claim 1.

According to this configuration, it is possible to move the guide jig while checking an occlusal relationship with an opposing tooth and guide the cutting burr to an appropriate position and direction. Furthermore, it is possible to check the position and direction of the implant cavity by visually checking the pole section or guide section that protrudes from the end side of the handle section. In this case, unlike a case where the position and direction of the implant cavity are checked by a tip of the cutting burr, it is possible to avoid the difficulty in visual checking due to bleeding or the like. Thus, it is possible to form an implant cavity in an ideal position and direction using the guide jig while making a visual check, and create a superstructure (artificial tooth crown) having an excellent occlusal relationship. Furthermore, since the protruding parts of the pole section and guide section come into contact with the handpiece, it is possible to regulate the cutting depth of the cutting burr. This eliminates the necessity for depth adjustment, and can thereby reduce a surgical time and avoid unintentional damaging of a peripheral region. This also makes creation of a stent or sophisticated equipment unnecessary, which may lead to cost reduction.

In the guide jig of the present invention, the pole section protrudes from the end side of the handle section in a direction opposite to the direction of cutting by the cutting burr. According to this configuration, since the handpiece comes into contact with the pole section that supports the handle section on the alveolar bone, it is possible to stably receive an impact from the handpiece and thereby prevent shaking of the handle section due to hand movement.

In the guide jig of the present invention, the pole section has an overall length corresponding to a target depth of the implant cavity. According to this configuration, since the handpiece comes into contact with the protruding part of the pole section, it is possible to form an implant cavity to an appropriate depth without the implant cavity being cut to deeper than a target depth.

In the guide jig of the present invention, the pole section is provided at an end of the handle section and the guide section is provided at a back side of the pole section seen from the handle section side. According to this configuration, it is possible to appropriately guide the cutting burr when forming an implant cavity for a maxillary/mandibular anterior tooth.

In the guide jig of the present invention, the pole section is provided at the end of the handle section and the guide section is provided in parallel with the pole section seen from the handle section side. According to this configuration, it is possible to appropriately guide the cutting burr when forming an implant cavity for a maxillary/mandibular molar.

In the guide jig of the present invention, the cutting burr includes a chuck section attached to the handpiece and a cutting section that extends from the chuck section in the cutting direction, an outside diameter of the cutting section is smaller than an outside diameter of the chuck section, and the guide section has a guide surface smaller than the outside diameter of the chuck section and corresponding to the outside diameter of the cutting section. According to this configuration, only the cutting section of the cutting burr is guided by the guide section and the chuck section comes into contact with the guide section, and it is thereby possible to regulate the depth of cutting by the cutting burr.

In the guide jig of the present invention, the guide section protrudes above the pole section in a direction opposite to the cutting direction. According to this configuration, the chuck section comes into contact with the guide section before the handpiece comes into contact with the pole section, and it is thereby possible to regulate the depth of cutting by the cutting burr.

### Technical Advantage of the Invention

According to the guide jig of the present invention, it is possible to move the guide jig while checking an occlusal relationship with an opposing tooth and guide the cutting burr to an appropriate position, and thereby appropriately form an implant cavity. Furthermore, since the depth of cutting by the cutting burr is regulated, it is possible to shorten the surgical time without unintentionally damaging the peripheral region. Moreover, it is possible to eliminate the necessity for creation of a stent or sophisticated equipment, and thereby achieve a cost reduction.

### Brief Description of Drawings

FIG. 1 is a perspective view of a guide jig according to the present embodiment;
FIG. 2 is a side view of the guide jig according to the present embodiment;
FIG. 3 shows top views of a few types of guide jigs according to the present embodiment;
FIG. 4 shows diagrams describing a method of using the guide jig according to the present embodiment;
FIG. 5 is a perspective view of a guide jig according to a modification example;
FIG. 6 shows a diagram describing a method of using the guide jig according to the modification example; and
FIG. 7 shows a diagram describing a method of using a guide jig according to another modification example.

### Description of Embodiment

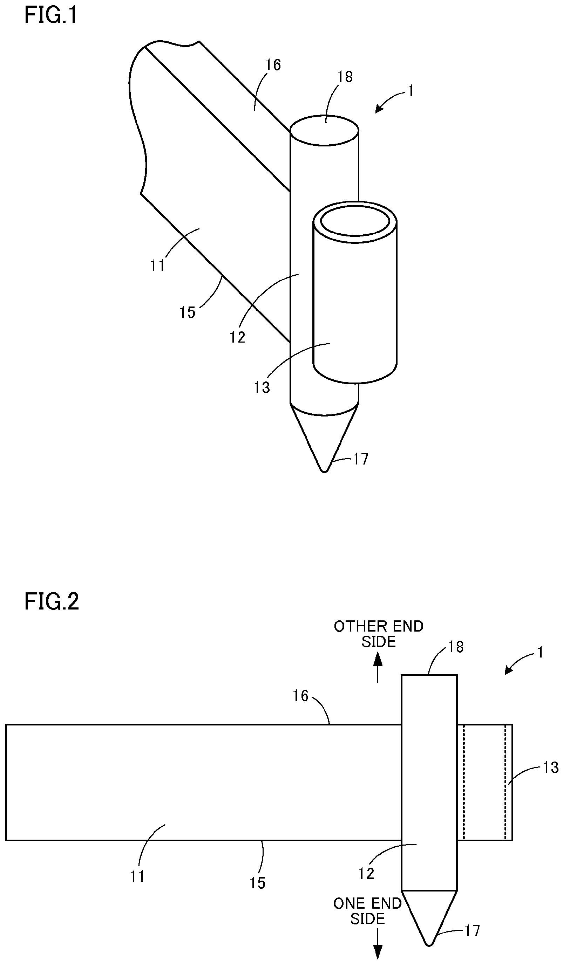

Hereinafter, an embodiment of the present invention will be described in detail with reference to the accompanying drawings. FIG. 1 is a perspective view of a guide jig according to the present embodiment. FIG. 2 is a side view of the guide jig according to the present embodiment. In FIG. 1 and FIG. 2, description will be given by taking a guide jig for a maxillary/mandibular anterior tooth as an example.

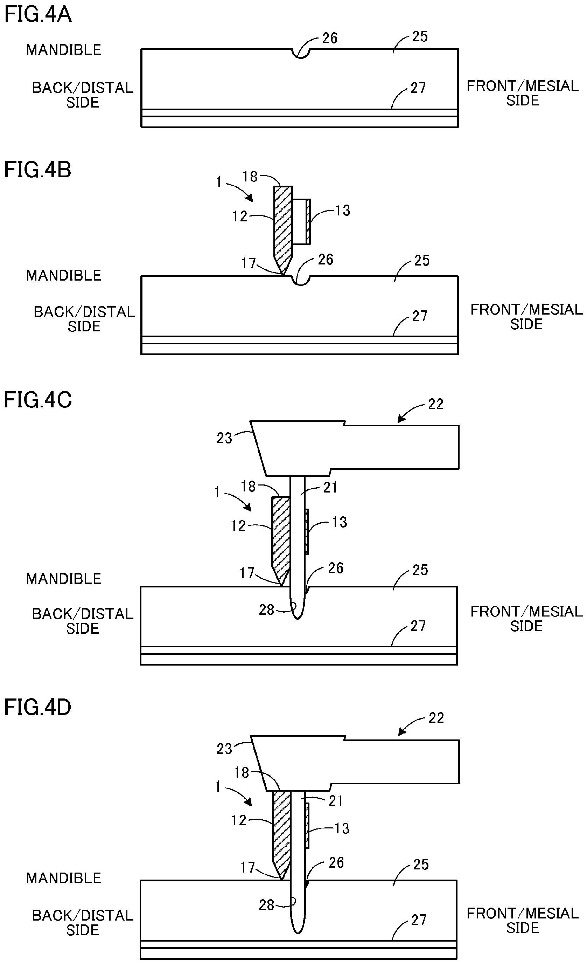

As shown in FIG. 1 and FIG. 2, a guide jig 1 is intended to be inserted into an oral cavity of a patient and guide cutting of an implant cavity, and is provided with a pole section 12 and a guide section 13 on an end side of a handle section 11 which is formed of an elongated fashion. The handle section 11 has a rectangular cross section and is long enough to be held at a base side thereof and moved with the end side thereof inserted in the oral cavity. The pole section 12 is provided at the end of the handle section 11 to support the end side of the handle section 11 on the alveolar bone 25 (see FIG. 4). The pole section 12 is formed into a columnar shape and fixed to the end of the handle section 11 in an upright position.

A tapered abutting section 17 which protrudes from an undersurface 15 of the handle section 11, and a diameter of which decreases downward, is formed on one end side of the pole section 12. With this abutting section 17 abutting on the alveolar bone 25, the pole section 12 is tiltably and rotatably supported with the abutting section 17 as a fulcrum. A regulation surface 18 is formed on the other end side of the pole section 12, which protrudes from a top surface 16 of the handle section 11 to regulate the amount of cutting by a cutting burr 21 (see FIG. 4). The regulation surface 18 comes into contact with a head 23 of a handpiece 22 during cutting of the implant cavity and thereby regulates the descent of the cutting burr 21 to a depth deeper than a target depth.

In this case, the pole section 12 has a length corresponding to the target depth of the implant cavity. That is, the pole section 12 is designed by taking into account the length of the cutting burr 21 that protrudes from the head 23 of the handpiece 22 and the target depth of the implant cavity. This prevents the implant cavity from being cut deeper than the target depth and allows the implant cavity of an appropriate depth to be formed. Therefore, when the distance to the mandibular nerve or maxillary sinus is small or the like, it is possible to prevent the peripheral region from being damaged. Note that instead of the overall length of the pole section 12, the length of the cutting burr 21 may be changed to adjust the depth of the implant cavity.

The pole section 12 is provided with the guide section 13 that guides the cutting burr 21, at the back side seen from the handle section 11 side. The guide section 13 is formed into a cylindrical tubular shape and fixed to an outer circumferential surface of the pole section 12 so as to be in parallel with the pole section 12. The guide section 13 has substantially the same length as a longitudinal width of the handle section 11 and is positioned at a position lower than the regulation surface 18 of the pole section 12. The inner diameter of the inner surface of the guide section 13 is formed so as to match the outside diameter of the cutting burr 21. The cutting burr 21 is inserted into the guide section 13 and cutting by the cutting burr 21 is thereby guided along the inner surface of the guide section 13.

The guide jig 1 configured in this way is inserted into the oral cavity of the patient and supported onto the alveolar bone 25 by the pole section 12. The orientation and position of the guide section 13 are adjusted by moving the handle section 11 with the abutting section 17 as a fulcrum. Since the orientation and position of the guide section 13 can be easily adjusted, it is possible to reduce the operator's burden. By visually checking the other end side of the pole section 12 that protrudes above the handle section 11, it is possible to check the position and the direction of the implant cavity during cutting. Thus, it is possible to form the implant cavity at an appropriate position, direction and depth while checking an occlusal relationship with the opposing tooth.

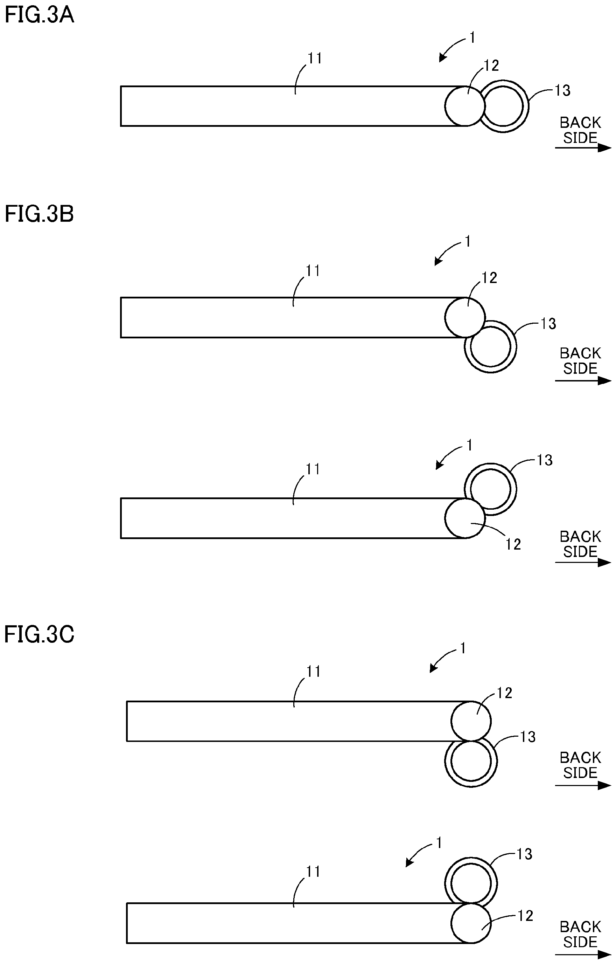

A plurality of types of the guide jig may be used for different purposes according to the diameter of the implant cavity and the type of the implant used. FIG. 3 shows top views of a few types of guide jigs according to the present embodiment. FIG. 3A illustrates a guide jig for a maxillary/mandibular anterior tooth, FIG. 3B illustrates a modification example of a guide jig for a maxillary/mandibular anterior tooth and FIG. 3C illustrates a guide jig for a maxillary/mandibular molar. Note that identical names are assigned identical reference numerals for convenience of description hereinafter.

As shown in FIG. 3A, in the guide jig 1 for the maxillary/mandibular anterior tooth, the guide section 13 is provided at the back side of the pole section 12 in one line seen from the handle section 11 side. For this reason, when forming implant cavities for the maxillary/mandibular anterior teeth arranged in line in the front of the oral cavity, this makes it easier to appropriately guide the cutting burr 21 (see FIG. 4) while checking the position and direction of the implant cavities. In the case of the guide jig for the maxillary/mandibular anterior tooth, the guide section 13 may be provided at the back side of the pole section 12 seen from the handle section 11 side or the guide section 13 may be provided at the diagonally back side of the pole section 12 as the guide jig 1 shown in FIG. 3B. The guide jig 1 shown in FIG. 3B may also be used for maxillary/mandibular premolars.

As shown in FIG. 3C, in the guide jig 1 for the maxillary/mandibular molar, the guide section 13 is provided in parallel with the pole section 12 seen from the handle section 11 side. For this reason, when forming implant cavities for the maxillary/mandibular molars arranged at the back side in the oral cavity, this makes it easier to appropriately guide the cutting burr 21 while checking the position and direction of the implant cavities. In this case, in the case of the guide jig 1 at the top of FIG. 3C, the guide section 13 is provided on the right side of the pole section 12 and is used for the mandible right side molar and maxillary left side molar. In the case of the guide jig 1 at the bottom of FIG. 3C, the guide section 13 is provided on the left side of the pole section 12 and is used for the mandibular left side molar and maxillary right side molar.

Thus, the different guide jigs 1 are used according to the positions of teeth in the oral cavity. The implant cavity is formed by expanding the hole diameter in several stages. For this reason, each guide jig 1 is provided with the guide section 13 having an inner diameter that matches the diameter of the cutting burr 21. For example, different guide jigs 1 are used for when forming an implant cavity 28 using the cutting burr 21 having a diameter of 2 mm and when expanding the diameter of the implant cavity 28 using the cutting burr 21 having a diameter of 3 mm. For each guide jig 1, the pole section 12 is preferably designed to have a diameter of 2 mm and an overall length of 10 mm, and the guide section 13 is preferably designed to have an overall length of 5 mm.

A method of using the guide jig will be described with reference to FIG. 4. FIG. 4 shows diagrams describing the method of using the guide jig according to the present embodiment. In FIG. 4, an example of forming an implant cavity for the mandibular right side molar will be described, but the same method of using the guide jig is used for when forming implant cavities for other teeth. Here, a case where the guide jig at the top of FIG. 3C is used will be described.

As shown in FIG. 4A, a marking hole 26 having a diameter 2 mm and a depth of on the order of 1 mm is formed at an implantation position of an implant on the alveolar bone 25 using a round bar (not shown). In this way, the position at which the implant cavity 28 is formed is defined on the alveolar bone 25. The actual surface of the alveolar bone 25 is not flat and bleeding is often observed, and therefore the operator can check the implantation position of the implant using this hole 26 as a clue.

Next, as shown in FIG. 4B, the guide jig 1 for the cutting burr 21 having a diameter of 2 mm is inserted into the oral cavity and the tapered abutting section 17 of the pole section 12 is caused to abut thereon at a position 1 mm behind (distal) the hole 26. In this way, the end side of the guide jig 1 is stably supported on the alveolar bone 25. By moving the handle section 11 (see FIG. 3C) with the abutting section 17 as a fulcrum while checking an occlusal relationship, an optimum guide direction is determined using the guide jig 1. In this case, by visually checking the other end side of the pole section 12 that protrudes above the handle section 11, it is possible to check tilting or the like of the guide section 13.

Next, as shown in FIG. 4C, once the guide direction by the guide jig 1 is determined, the cutting burr 21 having a diameter of 2 mm is inserted into the hole of the guide section 13 with the handle section 11 being fixed. Then, by driving handpiece 22, the cutting burr 21 starts forming an implant cavity. Since the guide section 13 guides the cutting burr 21 in parallel with the pole section 12, it is possible to check a cutting situation of the implant cavity 28 by visually checking the other end side (top end side) of the pole section 12. Therefore, it is possible to avoid the difficulty in visual checking due to bleeding or the like unlike the case where a cutting situation of the implant cavity is checked by directly watching the tip of the cutting burr 21.

Next, as shown in FIG. 4D, cutting is continued until the head 23 of the handpiece 22 comes into contact with the regulation surface 18 on the other end side of the pole section 12. In this case, since the pole section 12 has a length corresponding to the target depth of the implant cavity 28, the cutting burr 21 never cuts beyond the target depth of the implant cavity 28, thus preventing damages to the peripheral region such as the mandibular nerve 27 (maxillary sinus during processing on a tooth on the maxillary side). Since the handpiece 22 comes into contact with the pole section 12, the handpiece 22 can be stably received by the pole section 12 on the alveolar bone 25 and it is possible to prevent shaking of the handle section 11 due to hand movement. The implant cavity 28 having a diameter of 2 mm is formed in this way.

Next, the guide jig 1 for the cutting burr 21 having a diameter of 3 mm is inserted into the oral cavity and the diameter of the implant cavity 28 is enlarged to 3 mm using a similar procedure. The implant cavity 28 is expanded using a final cutting burr according to the implant system and the formation of the implant cavity 28 is completed. After that, an implant is implanted into the implant cavity 28 and a superstructure (artificial tooth crown) is mounted via an abutment.

As described above, according to the present embodiment, it is possible to move the guide jig 1 while checking the occlusal relationship with the opposing tooth and guide the cutting burr 21 to an appropriate position. Moreover, the position and direction of the implant cavity 28 can be checked by visually checking the pole section 12 that protrudes from the end side of the handle section 11. In this case, it is possible to avoid the difficulty in visual checking due to bleeding or the like, unlike the case where the position and direction of the implant cavity 28 are checked while visually checking the tip of the cutting burr 21. Thus, it is possible to form the implant cavity 28 in an ideal position and direction using the guide jig 1 while visually checking it and create a superstructure (artificial tooth crown) having an excellent occlusal relationship. Moreover, the pole section 12 comes into contact with the handpiece and it is thereby possible to regulate the cutting depth of the cutting burr 21. This eliminates the necessity for depth adjustments, can thereby reduce the surgical time and avoid unintentional damages to the peripheral region. This also eliminates the necessity for creation of a stent or sophisticated equipment.

Note that the present invention is not limited to the above-described embodiment, but can be implemented modified in various ways as defined in the appended claims.

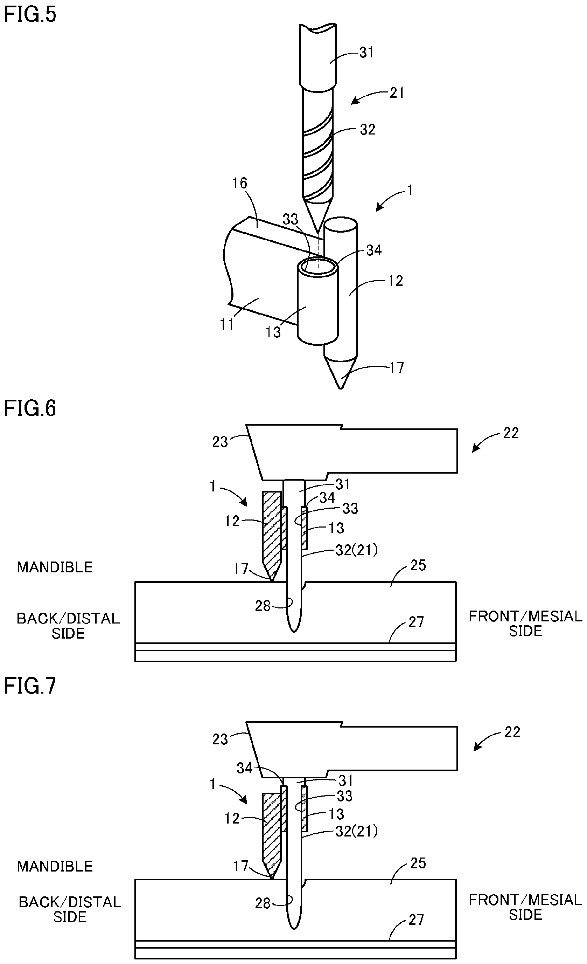

For example, the present embodiment has adopted the configuration in which the head 23 of the handpiece 22 comes into contact with the regulation surface 18 of the pole section 12 and the descent of the cutting burr 21 is thereby regulated, but the present invention is not limited to this configuration. As shown in a modification example in FIG. 5, the configuration may be such that the descent of the cutting burr 21 is regulated by the guide section 13. In this case, a predetermined length of the cutting burr 21 on a base side corresponds to a chuck section 31 mounted to the handpiece 22 and a portion extending downward (cutting direction) from the chuck section 31 corresponds to a cutting section 32 having a cutting blade. In this case, part of the chuck section 31 is chucked by the handpiece 22 and the remaining portion of the chuck section 31 is exposed to the outside together with the cutting section 32 (see FIG. 6). The outside diameter of the cutting section 32 is smaller than the outside diameter of the chuck section 31 and a step is formed on a boundary between the cutting section 32 and the chuck section 31. For example, the outside diameter of the chuck section 31 is 2.2 mm and the outside diameter of the cutting section 32 is 2.0 mm. The cutting section 32 need not be provided with a cutting blade throughout the overall length, and the cutting blade may be provided from some midpoint toward the tip as in the case of the present embodiment.

The inner circumferential surface of the guide section 13 constitutes a guide surface 33 which guides the cutting section 32 and is formed to be smaller than the outside diameter of the chuck section 31 to correspond to the outside diameter of the cutting section 32. For example, the guide surface 33 is formed to have a diameter of 2.05 mm provided with a tiny play with respect to the cutting section 32. Thus, the guide surface 33 which is the inner circumferential surface of the guide section 13 is formed so as to allow only the cutting section 32 except the chuck section 31 of the cutting burr 21 on the base side to be inserted therethrough. In this case, the top surface 34 of the guide section 13 functions as a regulation surface that regulates the amount of cutting by the cutting burr 21. The chuck section 31 comes into contact with a top surface 34 of this guide section 13 during cutting of the implant cavity 28 and the descent of the cutting burr 21 to a position deeper than a target depth is thereby regulated.

As shown in FIG. 6, when the cutting burr 21 starts forming the implant cavity 28, cutting of the alveolar bone 25 continues until the chuck section 31 comes into contact with the top surface 34 of the guide section 13. In this case, only the cutting section 32 of the cutting burr 21 is guided by the guide section 13, and the step of the chuck section 31 comes into contact with the guide section 13, whereby the descent of the cutting burr 21 is regulated. Thus, by designing the length of the chuck section 31 with the target depth of the implant cavity taken into account, it is possible to avoid cutting the implant cavity 28 beyond the target depth and avoid damaging the peripheral region such as the mandibular nerve 27 (maxillary sinus during processing on a tooth on the maxillary side).

In the above-described modification example, the pole section 12 protrudes above the guide section 13, but the present invention is not limited to this configuration. The guide section 13 may protrude above the pole section 12 as shown in another modification example in FIG. 7. In this way, the chuck section 31 comes into contact with the guide section 13 before the handpiece 22 comes into contact with the pole section 12, whereby the cutting depth of the cutting burr 21 is regulated. Thus, the descent of the cutting burr 21 can be regulated by the guide section 13 no matter if the cutting burr 21 is of a different manufacturer.
Note that the top surface of the guide section 13 may be formed to be flush with the top surface of the pole section 12.

Furthermore, the present embodiment and the modification examples have described a configuration in which the pole section 12 protrudes from the end side of the handle section 11 in a direction opposite to the direction of cutting by the cutting burr 21, but the present invention is not limited to this configuration. At least one of the pole section 12 and the guide section 13 may protrude from the end side of the handle section 11 in a direction opposite to the direction of cutting by the cutting burr 21. For example, both the pole section 12 and the guide section 13 may protrude from the end side of the handle section 11 to form the regulation surface 18 flush with each other or only the guide section 13 may protrude from the end side of the handle section 11.

Furthermore, the present embodiment and the modification examples have described a configuration in which the pole section 12 is provided at the end of the handle section 11 and the guide section 13 is provided on the outer circumferential surface of the pole section 12, but the present invention is not limited to this configuration. The pole section 12 may be provided at any position if at least the end side of the handle section 11 can be supported. The guide section 13 can be provided in whatever way if at least the cutting burr 21 can be guided on the end side of the handle section 11.

Furthermore, the present embodiment and the modification examples have described a configuration in which the handle section 11 is formed to have an elongated rectangular cross section, but the present invention is not limited to this shape. The handle section 11 may only be long enough to be held at the base side thereof and moved with the end side thereof inserted in the oral cavity.

Furthermore, the present embodiment and the modification examples have described the pole section 12 formed into a columnar shape, but the present invention is not limited to this shape. The pole section 12 may have any shape as long as the pole section 12 can support the end side of the handle section 11. Moreover, the abutting section 17 of the pole section 12 is not limited to the tapered shape, either.

Furthermore, the present embodiment and the modification examples have described the guide section 13 shaped into a tubular shape, but the present invention is not limited to this shape. The guide section 13 may have any shape as long as the guide section 13 can guide the cutting burr 21 on the end side of the handle section 11.

Furthermore, the present embodiment and the modification examples have described a configuration in which the guide section 13 is provided at the back side of or in parallel with the pole section 12 seen from the handle section 11 side, but the present invention is not limited to this configuration. The position of the guide section 13 with respect to the pole section 12 can be changed as appropriate according to the position of the tooth or the like.

Furthermore, the present embodiment has described a configuration in which the pole section 12 has a length corresponding to the target depth of the implant cavity 28, but present invention is not limited to this configuration. The pole section 12 may have a length whereby cutting by the cutting burr 21 can be regulated to an extent that the implant cavity 28 does not become excessively deep. In this case, the head 23 of the handpiece 22 need not come into contact with the regulation surface 18 of the pole section 12.

Furthermore, the present embodiment and the modification examples have described a configuration in which the tip of the abutting section 17 of the pole section 12 is formed on the central axis of the pole section 12, but the present invention is not limited to this configuration. The tip of the abutting section 17 may also be formed at a position decentered from the central axis of the pole section 12. For example, in the case of the guide jig 1 for the cutting burr 21 having a diameter of 2 mm, the tip of the abutting section 17 is formed on the central axis of the pole section 12, and in the case of the guide jig 1 for the cutting burr 21 having a diameter of 3 mm, the tip of the abutting section 17 is formed at a position decentered from the central axis of the pole section 12. In this case, in order that the abutting position of the abutting section 17 with respect to the alveolar bone 25 may be the same when forming the implant cavity 28 having a diameter of 2 mm and when forming the implant cavity 28 having a diameter of 3 mm, the tip of the abutting section 17 of the guide jig 1 for the cutting burr 21 having a diameter of 3 mm is formed at a position decentered from the central axis of the pole section 12. Thus, after forming the implant cavity 28 by the guide jig 1 for the cutting burr 21 having a diameter of 2 mm, it is also possible to expand the implant cavity 28 using the guide jig 1 for the cutting burr 21 having a diameter of 3 mm without changing the abutting position of the pole section 12.

### Industrial Applicability

As described above, the present invention has an effect of being able to appropriately form an implant cavity without forming any stent and further shorten the surgical time at low cost, and is especially useful for a guide jig that guides a cutting burr of a handpiece when forming an implant cavity.

The present application is based on Japanese Patent Application No.2012-250805 filed on November 15, 2012 and Japanese Patent Application No.2012-284861 filed on December 27, 2012.

## Claims

1. A guide jig for guiding a cutting burr attached to a handpiece when forming an implant cavity at an implantation position of an implant, the guide jig comprising:
an elongated handle section;
a pole section that supports an end side of the handle section; and
a guide section that guides the cutting burr, the guide section being providednext to the pole section on the end side of the handle section, wherein:
the guide section (13) is provided at one of the back side of the pole section (12), the diagonally back side of the pole section (12), the right side and the left side of the pole section (12), as seen from the handle section side; wherein
the guide section (13) is provided in parallel with the pole section (12) as seen from the handle section side, so that the orientation and position of the guide section (13) are adjustable by moving the handle section (11) with the abutting section (17) as a fulcrum, and wherein
the pole section is formed into a columnar shape and is fixed to the end of the handle section in an upright position,
at least one of the pole section and the guide section protrudes from the end side of the handle section in a direction opposite to a direction of cutting by the cutting burr,
further wherein the pole section comprises an abutting section formed on one end of the pole section, the abutting section being tapered such that a diameter of the abutting section decreases in size in the cutting direction.

2. The guide jig according to claim 1, wherein the pole section protrudes from the end side of the handle section in the direction opposite to the direction of cutting by the cutting burr.

3. The guide jig according to claim 1 or 2, wherein the guide section comprises a surface for regulating an amount of cutting by the cutting burr.

4. The guide jig according to claim 1, wherein the pole section is provided at an end of the handle section, and the guide section is provided at a back side of the pole section seen from a handle section side.

5. System for forming an implant cavity (28), comprising the guide jig according to claim 1 and the cutting burr having a chuck section attached to the handpiece and a cutting section that extends from the chuck section in the cutting direction, wherein a step is formed in the chuck section for regulating the descent of the cutting burr by coming into contact with the guide section.

6. System according to claim 5, wherein the guide section protrudes more than the pole section in a direction opposite to the cutting direction.

## Patentansprüche

1. Eine Führungsvorrichtung zum Führen eines Schneidbohrers, der an einem Handstück befestigt ist, wenn ein Implantathohlraum an einer Implantationsposition eines Implantats ausgebildet wird, wobei die Führungsvorrichtung umfasst:
eine längliche Handgriffsektion,
eine Stabsektion, die eine Endseite der Handgriffsektion trägt, und
eine Führungssektion, die den Schneidbohrer führt, wobei die Führungssektion neben der Stabsektion auf der Endseite der Handgriffsektion bereitgestellt wird, wobei:
die Führungssektion (13) an einer von der hinteren Seite der Stabsektion (12), der in Diagonalrichtung hinteren Seite der Stabsektion (12), der rechten Seite und der linken Seite der Stabsektion (12), gesehen von der Seite der Handgriffsektion aus, bereitgestellt wird, wobei
die Führungssektion (13) parallel zu der Stabsektion (12), gesehen von der Seite der Handgriffsektion, bereitgestellt wird, so dass die Ausrichtung und die Position der Führungssektion (13) einstellbar sind durch Bewegen der Handgriffsektion (11) mit der Stoßsektion (17) als Hebelstütze, und wobei
die Stabsektion zu einer säulenförmigen Gestalt geformt ist und in einer aufrechten Position an dem Ende der Handgriffsektion befestigt ist,
wenigstens eine von der Stabsektion und der Führungssektion von der Endseite der Handgriffsektion in einer Richtung, entgegengesetzt zu einer Richtung des Schneidens durch den Schneidbohrer, vorspringt,
ferner wobei die Stabsektion eine Stoßsektion umfasst, die an einem Ende der Stabsektion geformt ist, wobei die Stoßsektion derart verjüngt ist, dass ein Durchmesser der Stoßsektion in der Schneidrichtung in der Größe abnimmt.

2. Die Führungsvorrichtung nach Anspruch 1, wobei die Stabsektion von der Endseite der Handgriffsektion in der Richtung, entgegengesetzt zu der Richtung des Schneidens durch den Schneidbohrer, vorspringt.

3. Die Führungsvorrichtung nach Anspruch 1 oder 2, wobei die Führungssektion eine Fläche zum Regulieren eines Ausmaßes des Schneidens durch den Schneidbohrer umfasst.

4. Die Führungsvorrichtung nach Anspruch 1, wobei die Stabsektion an einem Ende der Handgriffsektion bereitgestellt wird und die Führungssektion an einer hinteren Seite der Stabsektion, gesehen von einer Seite der Handgriffsektion, bereitgestellt wird.

5. System zum Formen eines Implantathohlraums (28), das die Führungsvorrichtung nach Anspruch 1 und den Schneidbohrer umfasst, der eine Futtersektion, die an dem Handstück befestigt ist, und eine Schneidsektion, die sich von der Futtersektion aus in der Schneidrichtung erstreckt, aufweist, wobei in der Futtersektion eine Stufe zum Regulieren der Abwärtsbewegung des Schneidbohrers durch In-Berührung-Kommen mit der Führungssektion geformt ist.

6. System nach Anspruch 5, wobei die Führungssektion weiter als die Stabsektion in einer Richtung, entgegengesetzt zu der Schneidrichtung, vorspringt.

## Revendications

1. Un gabarit de guidage pour guider une barre de coupe fixée à une pièce à main lors de la formation d'une cavité d'implant à une position d'implantation d'un implant, le gabarit de guidage comprenant :
une section de manche allongée ;
une section de poteau qui supporte une face d'extrémité de la section de manche ; et
une section de guidage qui guide la barre de coupe, la section de guidage étant prévue à côté de la section de poteau sur la face d'extrémité de la section de manche, dans laquelle :
la section de guidage (13) est prévue sur l'un des côtés arrière de la section de poteau (12), le côté arrière en diagonale de la section de poteau (12), le côté droit et le côté gauche de la section de poteau (12), vu du côté de la section de manche ; dans laquelle
la section de guidage (13) est prévue parallèlement à la section de poteau (12), vue du côté de la section de manche, de sorte que l'orientation et la position de la section de guidage (13) sont réglables en déplaçant la section de manche (11) avec la section de butée (17) en tant que point d'appui, et dans lequel
la section de poteau a la forme d'une colonne et est fixée à l'extrémité de la section de manche dans une position verticale,
au moins une parmi la section de poteau et la section de guidage dépassant du côté d'extrémité de la section de manche dans une direction opposée à la direction de coupe par la barre de coupe,
dans lequel la section de poteau comprend en outre une section de butée formée à une extrémité de la section de poteau, la section de butée étant effilée de sorte qu'un diamètre de la section de butée diminue en taille dans la direction de coupe.

2. Le gabarit de guidage selon la revendication 1, dans lequel la section de poteau fait saillie à partir du côté d'extrémité de la section de manche dans la direction opposée à la direction de coupe par la barre de coupe.

3. Le gabarit de guidage selon la revendication 1 ou 2, dans lequel la section de guidage comprend une surface pour réguler une quantité de coupe par la barre de coupe.

4. Le gabarit de guidage selon la revendication 1, dans lequel la section de poteau est prévue à une extrémité de la section de manche, et la section de guidage est prévue sur un côté arrière de la section de poteau vu depuis un côté de la section de manche.

5. Système pour former une cavité d'implant (28), comprenant le gabarit de guidage selon la revendication 1 et la barre de coupe ayant une section de mandrin attachée à la pièce à main et une section de coupe qui s'étend depuis la section de mandrin dans la direction de coupe, dans lequel une marche est formée dans la section de mandrin pour réguler la descente de la barre de coupe en entrant en contact avec la section de guidage.

6. Système selon la revendication 5, dans lequel la section de guidage dépasse plus que la section de poteau dans une direction opposée à la direction de coupe.
